Europäisches Patentamt

European Patent Office

Office européen des brevets

(19)

(11)  EP 0 672 514 B1

(12)  **EUROPÄISCHE PATENTSCHRIFT**

(45) Veröffentlichungstag und Bekanntmachung des Hinweises auf die Patenterteilung:
**27.05.1998  Patentblatt 1998/22**

(51) Int. Cl.$^6$: **B29C 47/70**, D01D 1/06

(21) Anmeldenummer: **95102871.1**

(22) Anmeldetag: **01.03.1995**

(54) **Verteiler für viskose Flüssigkeiten mit multiplen radialen Ausgängen**

Distributor for viscous fluids with multiple radial discharge

Distributeur pour liquides visqueux à décharge radiale multiple

(84) Benannte Vertragsstaaten:
**CH DE FR GB IT LI**

(30) Priorität: **18.03.1994 DE 4409234**

(43) Veröffentlichungstag der Anmeldung:
**20.09.1995  Patentblatt 1995/38**

(73) Patentinhaber:
**Zimmer Aktiengesellschaft
D-60388 Frankfurt (DE)**

(72) Erfinder:
• **Schnaus, Walter
  D-63517 Rodenbach (DE)**
• **Streng, Michael
  D-63477 Maintal (DE)**
• **Schönmeier, Franz
  D-63477 Maintal (DE)**
• **Biller, Stephan
  D-61440 Oberursel (DE)**

(56) Entgegenhaltungen:
DE-A- 2 821 559          DE-C- 4 200 842
FR-A- 1 477 826          US-A- 3 724 492
US-A- 5 269 348

**Beschreibung**

Die Erfindung bezieht sich auf einen Verteiler für viskose Flüssigkeiten, welcher eine zentrale Zuleitung und eine Mehrzahl von mit je einem Ventil bestückten Ausgangsleitungen umfaßt. Insbesondere betrifft die Erfindung eine Vorrichtung zum Verteilen von Polymerschmelze auf eine Mehrzahl von Schmelzspinneinheiten oder vergleichbaren Extrusions-Einheiten.

Bei der Herstellung von Filamenten oder ähnlichen Produkten muß die über eine einzige Leitung vom Polykondensationsreaktor oder einer Granulat-Schmelzvorrichtung zugeführte Polymerschmelze auf eine Vielzahl von Spinneinheiten oder vergleichbaren Extrusionseinheiten gleichmäßig verteilt werden. Toträume innerhalb des Verteilers sollten hierbei möglichst vermieden werden, und bei vorübergehenden Betriebsunterbrechungen das Produkt im Verteiler nicht stagnieren, da eine verlängerte Verweilzeit des Polymers zur thermischen Zersetzung dieses Polymers bis hin zu unlöslichen, vernetzten Produkten führt.

Bei dem im US-Patent 3724 492 beschriebenen Verteiler ist eine zentrale Zuleitung über eine Mehrzahl radialer Leitungen mit einer in sich geschlossenen Ringleitung verbunden, wobei die Ableitung der Polymerschmelze über eine gleiche Vielzahl von in der Ringleitung asymmetrisch zu den radialen Leitungen angeordneten Drei-Wege-Ventilen erfolgt. Diese Anordnung setzt bei geöffneten Ventilen komplexe Verhältnisse von Schmelzedruck und Dimensionierung der Verteiler-Leitungen voraus, was eine Anpassung an Schmelzen mit unterschiedlichen Fließverhalten sehr erschwert. Das Gesamt-Volumen der Verteiler-Leitungen ist verhältnismäßig groß, was bei verlängerter Verweilzeit infolge partieller oder totaler Schließung der Ventile zu einer entsprechend großen Menge an thermisch belasteten Produkt führt, welches ausgeschleust werden muß.

Bei dem Verteiler des US-Patentes 5 269 348 werden diese Nachteile durch direkten Anschluß von Zwei-Wege-Ventilen mit speziell gestaltetem Ventilkopf und Führungszylinder an die zentrale Zuleitung vermieden. Hierbei wird ständig ein kleiner Teil des Produktes nicht den Verteiler-Ventilen, sondern einem Sammelbehälter mit Produktrückführung oder einer zusätzlichen Granuliervorrichtung zugeführt, was nicht in allen Anwendungsfällen erwünscht ist.

Aufgabe der vorliegenden Erfindung ist es daher, einen Verteiler für viskose Flüssigkeiten mit multiplen radialen Ausgängen zur Verfügung zu stellen, der die zuvor genannten Nachteile nicht oder zumindest in geringerem Umfang aufweist. Insbesondere sollte der Verteiler ein geringes Volumen ohne Toträume aufweisen und während des Betriebes das gesamte Produkt über die Verteilerventile zu den Weiterverarbeitungs-Einheiten abgeleitet werden.

Die Lösung dieser Aufgabe erfolgt erfindungsgemäß durch einen Verteiler gemäß den Merkmalen der Patentansprüche.

Dieser Verteiler besteht aus einer zentralen Zuleitung und radial damit verbunden mindestens 2, vorzugsweise 3 bis 8 Ausgangsventilen, wobei jedes Ventil eine in axialer Richtung des Ventils bewegliche Ventilspindel und eine Ausgangsleitung aufweist. In die Wandung der Zuleitung sind in gleicher Höhe, symmetrisch um die Zuleitung herum Ventilsitze eingelassen, in die die Ventilspindeln mit bevorzugt tellerförmigem Ventilkopf eingreifen, und so die Strömung von der Zuleitung zu den von den Ventilen abgehenden Ausgangsleitungen unterbrechen. In geöffneter Position gibt der Fuß des Ventilkopfes die Öffnung im Ventilgehäuse zur Ausgangsleitung gerade frei, während die tellerförmige Oberseite des Ventilkopfes in die Strömung hineinragt.

Erfindungsgemäß ist in die zentrale Zuleitung in Höhe der Ventilsitze ein Strömungsverdränger mit zylindrischem Unterteil und der Flüssigkeitsströmung zugewandtem, kegelförmigen Oberteil unter Ausbildung eines konzentrischen Ringspaltes zwischen der Außenwand des Verdrängers und der Innenwand der Zuleitung eingesetzt. Die Höhe (g) des zylindrischen Unterteils ist in etwa gleich dem Durchmesser (e) der Ventilsitze, genauer $g = (1,0 \text{ bis } 1,1) \cdot e$, bevorzugt $g = e$. Die Gesamthöhe (h) des Strömungsverdrängers ist mindestens gleich dem Innendurchmesser (f) des verdränger-freien Bereiches der zentralen Zuleitung, genauer $h = (1,0 \text{ bis } 1,3) \cdot f$, bevorzugt $h = 1,15 \cdot f$.

Im Bereich des zylindrischen Verdränger-Unterteils ist die Breite (k) des Ringspaltes konstant, wobei $K = (0,10 \text{ bis } 0,25) \cdot f$, bevorzugt $K = 0,19 \cdot f$ ist. Am Fuße des zylindrischen Verdränger-Unterteils ist der Ringspalt, zur Vermeidung toter Winkel, vorzugsweise leicht abgerundet oder abgeschrägt. Im Bereich des kegelförmigen Verdränger-Oberteils ist der Ringspalt anströmseitig trichterartig erweitert, wobei die Spaltbreite graduell von k bis f/2 zunimmt. Der Ringspalt bewirkt in Verbindung mit dem Strömungsverdränger einerseits eine Beschleunigung der Flüssigkeitsströmung und andererseits eine Minimierung des Flüssigkeitsvolumens in diesem Bereich. Dadurch wird, insbesondere bei vorübergehendem Schließen eines Teils der Verteiler-Ventile, eine ausreichende Spülwirkung des Verteilerbereichs unter Ausschluß toter Zonen erzielt. Im Fall einer Schließung sämtlicher Ventile ist die im Verteiler verbleibende und möglicherweise thermisch abbauende Flüssigkeitsmenge gering und kann somit bei erneuter Inbetriebnahme schnell, ohne größere Verluste ausgetragen werden.

Als weiteres erfindungsgemäßes Merkmal ist der Durchmesser (a) der Öffnung zur Ausgangsleitung kleiner als der Innendurchmesser (b) des zylindrischen Ventilgehäuses, wobei $a = (0,5 \text{ bis } 0,7) \cdot b$, bevorzugt etwa $0,6 \cdot b$ ist. Unmittelbar daran anschließend erweitert sich die Ausgangsleitung bis zum Durchmesser (d), wobei d in der gleichen Größenordnung wie b liegt und $d = (1,4 \text{ bis } 1,9) \cdot a$, bevorzugt etwa $1,65 \cdot a$ ist. Die Länge (c) der Übergangszone vom Durchmesser (a) zum Durchmesser (d) beträgt c = (0,8 bis 1,5) · a, bevorzugt etwa 1,33 · a. Durch diese Querschnittsverengung gefolgt von einer Querschnitterweiterung wird in dem zum Ventilgehäuse benachbarten Bereich der Ausgangsleitung eine Sogwirkung erzeugt, wodurch die Tendenz der Flüssigkeit, in der der Ausgangsleitung gegenüberliegenden Zone des Ventilkopf-Oberteils zu stagnieren, kompensiert wird.

Der erfindungsgemäße Verteiler kann für jegliche, viskose Flüssigkeit verwendet werden, die von einer einzelnen Zuleitung selektiv auf eine Mehrzahl von Ausgangsleitungen zu verteilen ist. Die Spaltbreite k und das Verhältnis a : b sind um so größer, je höher die Viskosität der Flüssigkeit ist. Eine bevorzugte Anwendung ist die Verteilung einer Polymerschmelze auf eine Vielzahl von Extrusionspositionen oder von Schmelzspinneinheiten. Beispiele solcher Polymere sind Polyethylenterephthalat, Polybutylenterephthalat, Polyamid-6, Polyamid-6.6, Polyolefine und Copolymere hiervon. In diesem Fall müssen der Verteiler einschließlich des Strömungsverdrängers und die Polymerleitungen über einen oder mehrere Heizmäntel, in denen ein geeignetes Wärmeträgermedium zirkuliert, beheizt werden. Andere Beheizungsarten, beispielsweise Heizbänder, können ebenfalls verwendet werden.

Die Erfindung wird im folgenden an Hand der Zeichnungen erörtert, wobei

Fig. 1 einen Längsschnitt eines erfindungsgemäßen Verteilerventils einschließlich der zentralen Zuleitung mit eingesetztem Strömungsverdränger und der radialen Ausgangsleitung sowie der Ventilspindel bei geschlossenem Ventil, und zusätzlich gestrichelt bei geöffnetem Ventil;

Fig. 2 einem vergrößerten Längsschnitt eines erfindungsgemäßen, mit einem Heizmantel versehenen Ventils und von innen beheiztem Strömungsverdränger;

Fig. 3 eine Draufsicht auf einen Verteiler mit zentraler Zuleitung und eingesetztem Strömungsverdränger sowie vier radialen, nur partiell dargestellten Ausgangsventilen;

Fig. 4 den beheizbaren Verteiler mit eingesetztem Strömungsverdränger der Fig. 3 im Schnitt A - A

Fig. 5 den ventilnahen Bereich einer Ausgangsleitung, im Längsschnitt (Fig. 5a) und im Querschnitt (Fig. 5b);

Fig. 6 ein schematisches Fließschema einer Produktionsanlage mit Polymerschmelze-Erzeugereinheit und erfindungsgemäßem Verteiler mit fünf Ausgangsventilen, von denen vier mit Spinnerei-Einheiten und eines mit einer Granuliervorrichtung verbunden sind;

zeigt.

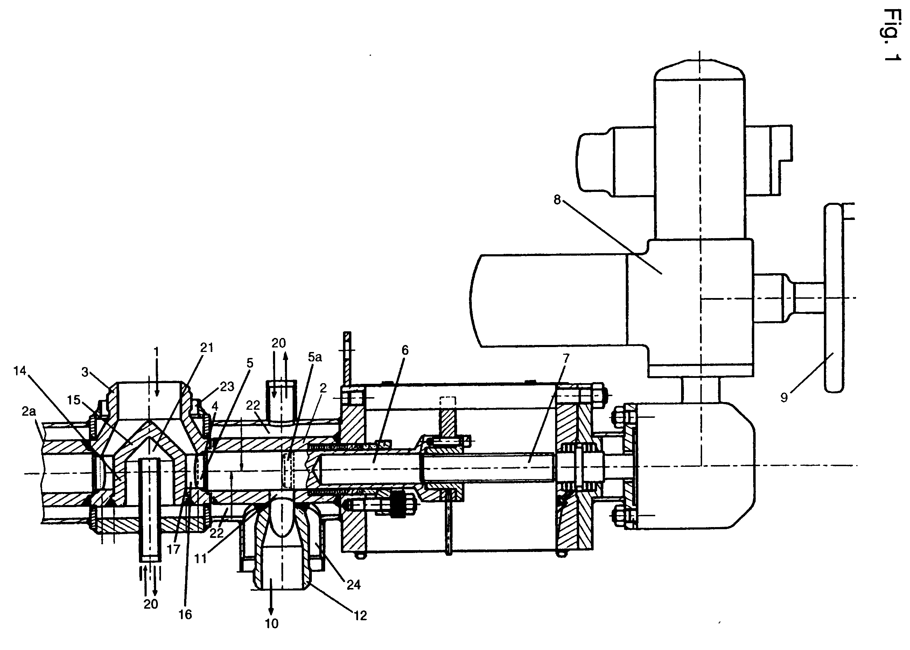

In Fig. 1 ist ein an die zentrale Zuleitung (1) radial angeschlossenes Ventil mit dem Ventilgehäuse (2) und der Ausgangsleitung (10) dargestellt sowie ein zweites Ventil (2a) angedeutet. Die Ventilspindel (6) mit dem Ventilkopf (5) ist mit der Antriebsspindel (7) und diese mit dem Antriebsmotor (8) mit Stellrad (9) verbunden, der die Ventilspindel (6) von der geschlossenen (5) bis zur geöffneten (5a) Ventilposition bewegt.

In die zentrale Zuleitung (1) ist in Höhe der Ventilsitze (4) ein Strömungsverdränger (14 + 15) unter Ausbildung des Ringspaltes (16) zentrisch eingesetzt. Die zentrale Zuleitung (1) kann, wie hier dargestellt, im Bereich des Strömungsverdrängers (14 + 15) etwas erweitert sein, was insbesondere bei einer größeren Anzahl von Ausgangsventilen (2) pro Verteiler zweckmäßig ist. In diesem Fall wird durch die zu den Ventilen hin orientierte Schrägstellung des trichterförmigen Spaltbereiches eine noch bessere Spülwirkung erreicht. Der gesamte Verteiler ist beheizbar, wofür bei (20) zugeführte oder abgeführte (zweite Leitung im Längsschnitt nicht sichtbar) Wärmeträgerflüssigkeit durch den Innenraum (21) des Strömungsverdrängers und durch die Heizmäntel des Ventils, der Zuleitung und der Ausgangsleitung (22, 23 und 24) geleitet wird. Sofern die zu verteilende Flüssigkeit bei Raumtemperatur fließfähig ist, kann die Beheizung entfallen.

Die bei (1) zufließende Flüssigkeit oder Polymerschmelze wird von dem kegelförmigen Oberteil (15) des Strömungsverdrängers gleichmäßig auf den konzentrischen Ringspalt (16) verteilt und gelangt bei geöffnetem Ventil (Ventilkopf-Position 5a) durch den zylindrischen Innenraum des Ventilgehäuses (2) über die Öffnung (11) in der Wandung des Ventilgehäuses (2) zu der Ausgangsleitung (10). Bezogen auf die Fließrichtung in der Zuleitung (1) ist die Strömung innerhalb des Ventilgehäuses (2) radial und in der Ausgangsleitung (10) parallel oder bei etwas schräg angesetzter Leitung (10) nahezu parallel.

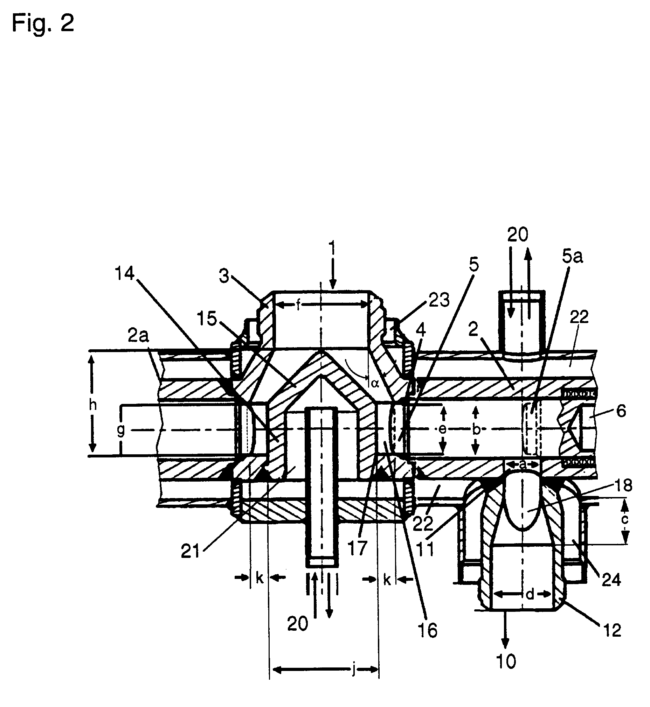

Alle weiteren Details sind in Fig. 2 im vergrößerten Maßstab dargestellt und werden nachfolgend unter Bezug auf Fig. 2 näher erörtert.

Vorzugsweise ist die Zuleitung (1) mit dem Innendurchmesser (f) in Strömungsrichtung unmittelbar vor den Ventilsitzen (4) graduell erweitert, wobei die Wandung (3) im Bereich des Verdränger-Oberteils (15) einen Winkel ($\alpha$) im Bereich von 15 bis 30 °C, bevorzugt etwa 25° zur Achse der Zuleitung bildet. In Höhe des Verdränger-Unterteils (14) ist der Innendurchmesser der Zuleitung konstant und beträgt (j + 2 k) = (1,35 bis 1,75) · f, bevorzugt etwa 1,5 · f, wobei (j) der Aussendurchmesser des Verdränger-Unterteils ist.

In diesen Bereich der Zuleitung (1) ist zentrisch der Strömungsverdränger (14 + 15) eingesetzt. Die Höhe (g) des zylindrischen Unterteils (14) ist etwa gleich dem Durchmesser (e) der Ventilsitze (4), während die Höhe des kegelförmigen Oberteils (15) der Länge des Bereiches der Zuleitung mit graduell zunehmendem Durchmesser entspricht. Die Kegelspitze kann leicht abgerundet oder abgeflacht sein. Bei Flüssigkeiten, die bei Raumtemperatur flüssig sind, kann der Verdränger massiv gestaltet sein. Bevorzugt ist der Verdränger jedoch hohl ausgeführt, wobei der Verdränger über den Hohlraum (21) mittels bei (20) zu- oder abgeführter Wärmeträgerflüssigkeit beheizt wird.

Die Breite (k) des Ringspaltes (16) zwischen Verdränger-Unterteil (14) und Innenwand der erweiterten Zuleitung bzw. Ventilkopf (5) bei geschlossenem Ventil sollte einerseits möglichst gering sein um eine hohe Strömungsbeschleunigung und ein geringes Flüssigkeitsvolumen zu sichern, andererseits groß genug um eine Stauung von Flüssigkeit zu verhindern. Bei der Auslegung sind der Flüssigkeitsdruck in der Zuleitung und die Viskosität entsprechend zu berücksichtigen. Allgemein beträgt k = (0,10 bis 0,25) · f , wobei für Polymerschmelzen vorzugsweise in etwa k = 0,19 · f ist. Bei großtechnischen Polymeranlagen liegt k im Bereich von 10 bis 20 mm.

Die bei (1) zuströmende Flüssigkeit wird durch den Kegel (15) gleichmäßig auf den Ringspalt (16) verteilt, wobei die trichterähnliche Einlaufzone die Gleichmäßigkeit der Strömung über den gesamten Querschnitt unterstützt. Am Fuß des Strömungsverdrängers ist der Winkel (17) zwischen Verdränger (14) und Ringspalt (16) abgerundet oder abgeschrägt, wobei sich ein Radius von etwa 3 bis 5 mm bewährt hat. Dadurch wird ein Stagnieren der Flüssigkeit im Winkelbereich (17) verhindert. Nach Durchtritt durch die Ventilsitz-Öffnung (4) strömt die Flüssigkeit innerhalb des zylindrischen Ventilgehäuses (2) zur Austrittsöffnung (11) und weiter zur Ausgangsleitung (10).

In geöffneter Ventil-Position gibt die Ventilspindel (6) die Austrittsöffnung (11) gerade frei, während der Ventilkopf (5a) in die Flüssigkeits-Strömung hineinragt. Um eine ausreichende Strömung bzw. Spülung auf der der Öffnung (11) entgegengesetzten Seite des Ventilkopfes (5a) sicher zu stellen, wird der Strömungsquerschnitt im Bereich der Öffnung (11) zunächst stark eingeengt (a) und danach innerhalb einer sehr kurzen Strecke (c) wieder stark erweitert (d). Hierdurch wird eine Beschleunigung der Strömungsgeschwindigkeit im Bereich der Austrittsöffnung (11) erzielt.

Der Übergang vom Querschnitt (a) zum Querschnitt (d) erfolgt graduell, in beliebiger Weise, z. B. trichterförmig oder, wie hier dargestellt, über eine Zwischenzone mit ovalem Querschnitt (18). Der durch die Querschnittsveränderungen erzielte Spüleffekt ist bei einer Zwischenzone mit ovalem Querschnitt etwas besser als bei einer Zone mit kreisförmigem Querschnitt. In jedem Fall ist aber wesentlich, daß der Übergang innerhalb einer kurzen Strecke (c) erfolgt.

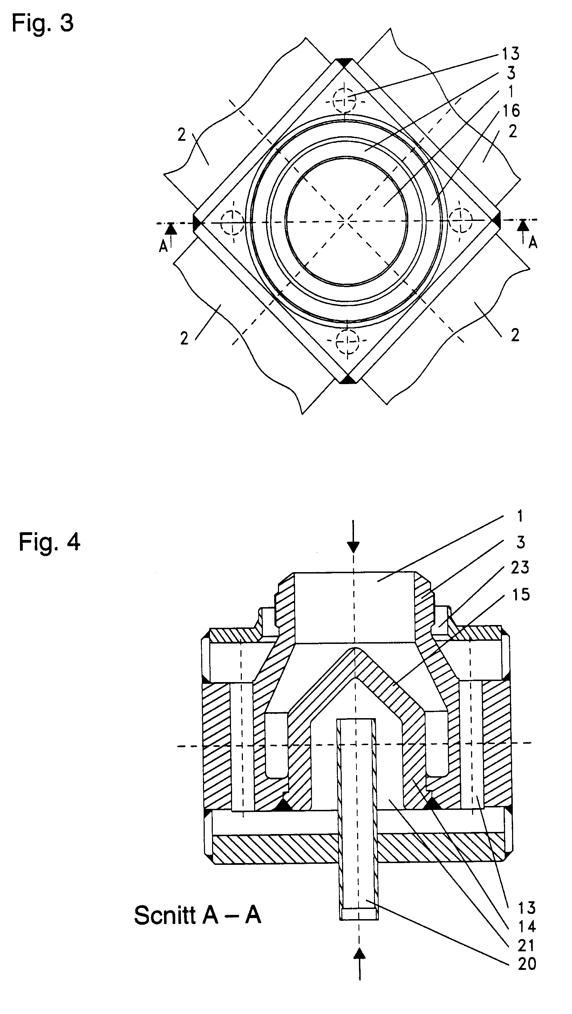

Fig. 3 zeigt eine Draufsicht auf einen Verteiler mit erweiterter zentraler Zuleitung (1) und eingesetztem Strömungsverdränger (14 + 15) sowie vier radialen, nur partiell dargestellten Ausgangsventilen (2). (13) sind Beheizungskanäle.

Fig. 4 zeigt den Verteiler von Fig. 3 im Schnitt A - A. Gegenüber der Darstellung in Fig. 2 ist dieser Schnitt um 45° zur Ventilebene versetzt. Deutlich erkennbar sind hierbei die von Wärmeträgerflüssigkeit durchflossenen Hohlräume (21) und (23).

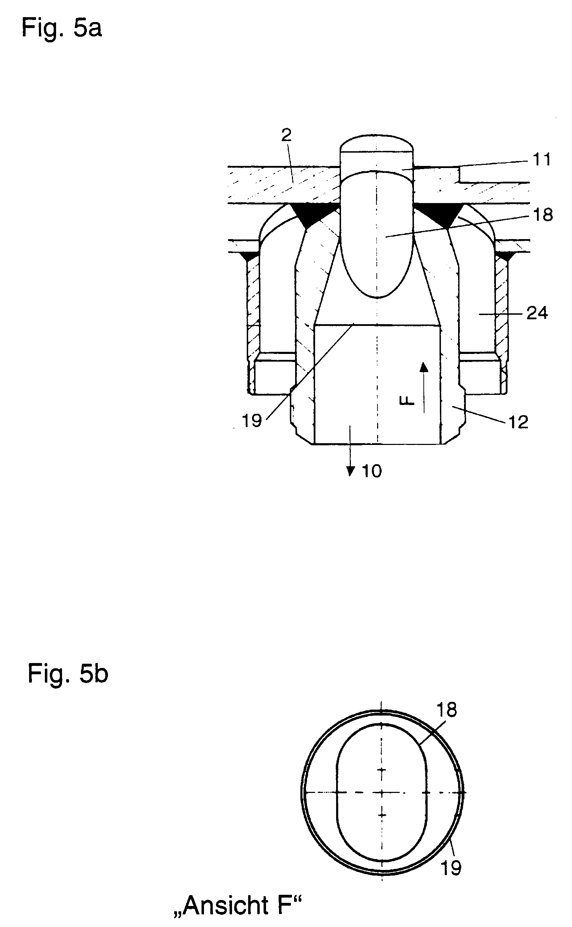

Fig. 5 zeigt vergrößert den ventilnahen Bereich der Ausgangsleitung (10) im Längsschnitt (Fig. 5a) und im Querschnitt (Fig. 5b). Der Strömungsquerschnitt nimmt in Strömungsrichtung unmittelbar nach der kreisförmigen Austrittsöffnung (11) des Ventilgehäuses (2) zu, wobei die Übergangszone vorzugsweise zunächst in einen ovalen Querschnitt (18) übergeht und erst danach in den maximalen, kreisförmigen Querschnitt (19). Der Innendurchmesser der daran anschließenden Ausgangsleitung (12) kann auch etwas geringer als der maximale Durchmesser (19) sein. Dies ist rein konstruktiv bedingt und ohne prinzipielle Bedeutung für die vorliegende Erfindung.

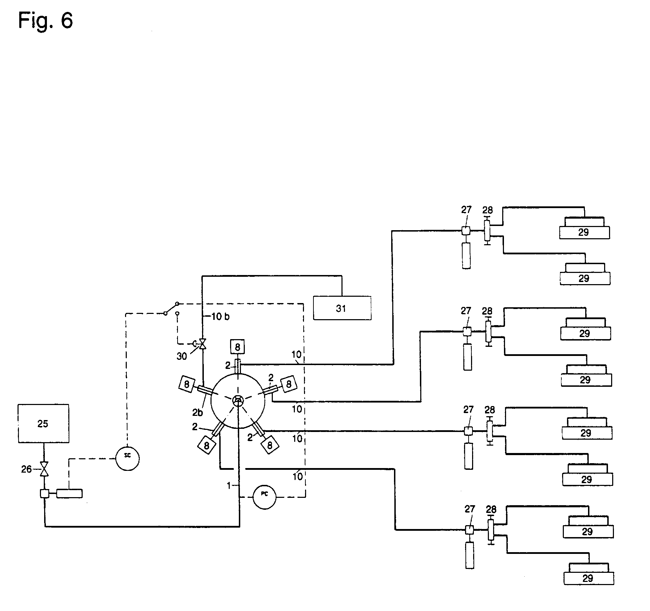

Fig. 6 zeigt schematisch ein Fließschema einer Spinnerei-Anlage mit erfindungsgemäßem Verteiler. Die Polymerschmelze fließt von der Polymerschmelze-Erzeugereinheit (25), zum Beispiel einem Polymerisationsreaktor oder einer Granulatschmelzvorrichtung, über das Stellventil (26) zu dem Verteiler, der mit fünf, über je einen Motor (8) betätigte Ausgangs-Ventile (2) bestückt ist. Vier der Ausgangsventile (2) sind über die Ausgangsleitungen (10) mit den Spinn-Einheiten (29) verbunden, wobei jeder Spinn-Einheit (29) eine Spinnpumpe (27) und ein Regelventil (28) vorgeschaltet sind. Das fünfte Ausgangsventil (2b) ist über die Ausgangsleitung (10b) mit Stellventil (30) mit der Granulier-Einheit (31) oder einem Sammelbehälter verbunden.

Bei störungsfreiem Betrieb der Spinn-Einheiten (29) bleibt das Verteilerventil (2b) geschlossen und die gesamte über die Leitung (1) dem Verteiler zugeführte Polymerschmelze fließt nach Verteilung auf die vier Ausgangsventile (2) über die Ausgangsleitungen (10) zu den Spinneinheiten (29). Analog wird bei vorübergehender Stillegung von einer bzw. von bis zu drei der vier Spinn-Einheiten (29), zum Beispiel bei Fadenbruch, nach entsprechender Reduzierung über das Stellventil (26) der zugeführten Schmelzemenge die Polymerschmelze den verbleibenden funktionsfähigen Spinn-Einheiten (29) zugeführt. Bedingt durch das geringe Volumen des Ringspaltes (16) ist auch dann eine zur Spülung des gesamten Verteilers ausreichende Strömungsgeschwindigkeit gesichert, so daß das gesamte Polymer ohne Qualitätsnachteile versponnen werden kann. Eine partielle Ausschleußung von Polymerschmelze ist, solange mindestens eine Spinn-Einheit (29) in Betrieb ist, nicht erforderlich.

Bei kurzzeitigem Ausfall sämtlicher Spinn-Einheiten (29) werden die zugeordneten Verteiler-Ventile (2) geschlossen und stattdessen nach Aktivierung des Stellventils (30) das fünfte Ausgangsventil (2b) geöffnet. In diesem Fall gelangt die gesamte Polymer-Menge über die Ausgangsleitung (10b) zu der Granulier-Einheit (31) oder zu einem Schmelze-Sammelbehälter. Ein Stagnieren bzw. ein thermischer Abbau von Polymerschmelze im Verteiler ist somit ausgeschlossen. Das während der Dauer der Unterbrechung des Spinn-Betriebes in der Granulier-Einheit (31) erzeugte Granulat bzw. die in einem Sammelbehälter aufgefangene Polymerschmelze können ohne Qualitätseinbußen in den Prozeß rückgeführt werden oder anderweitig verwendet werden.

Bei thermisch weniger empfindlichen Flüssigkeiten können auch sämtliche Verteiler-Ausgangsventile (2) mit den Verbraucher-Einheiten verbunden sein. Im Fall eines vorübergehenden Ausfalls sämtlicher Verbraucher-Einheiten werden dann sämtliche Verteiler-Ausgangsventile geschlossen. Die im Verteiler verbleibende Flüssigkeits-Menge ist entsprechend dem geringen Innenvolumen des Verteilers klein, so daß beim Wiederanfahren ein kurzes Spülen des Verteilers ausreicht.

## Patentansprüche

1. Verteiler für viskose Flüssigkeiten bestehend aus einer zentralen Zuleitung mit dem Innendurchmesser (f) und mindestens zwei mit der Zuleitung radial verbundenen Ventilen, wobei jedes Ventil ein zylindrisches Gehäuse mit dem Innendurchmesser (b), eine in einer Ausgangsleitung mündende Ausgangsöffnung und eine im Gehäuse in axialer Richtung bewegliche Ventilspindel mit Ventilkopf, der in geschlossener Ventilposition in einem in die Wandung der Zuleitung eingelassenen Ventilsitz mit dem Durchmesser (e) eingreift und dessen Fuß in geöffneter Ventilposition die Ausgangsöffnung gerade frei gibt, umfaßt, dadurch gekennzeichnet,

   - daß in die Zuleitung im Bereich der Ventilsitze ein Strömungsverdränger der Höhe (h) mit zylindrischem Unterteil der Höhe (g) und der Flüssigkeitsströmung zugewandtem kegelförmigen Oberteil unter Ausbildung eines Ringspaltes der Breite (k) im Bereich des Verdränger-Unterteils, zentrisch eingesetzt ist, wobei

$$g = (1{,}0 \text{ bis } 1{,}1) \cdot e$$

$$h = (1{,}0 \text{ bis } 1{,}3) \cdot f$$

$$\text{und } k = (0{,}10 \text{ bis } 0{,}25) \cdot f$$

   - und daß die Ausgangsleitung unmittelbar im Anschluß an die Ausgangsöffnung mit dem Durchmesser (a) über eine Länge (c) bis zum Innendurchmesser (d) erweitert ist, wobei

$$a = (0{,}5 \text{ bis } 0{,}7) \cdot b$$

$$d = (1{,}4 \text{ bis } 1{,}9) \cdot a$$

$$\text{und } c = (0{,}8 \text{ bis } 1{,}5) \cdot a$$

2. Verteiler gemäß Anspruch 1 dadurch gekennzeichnet, daß die Zuleitung im Bereich des Strömungsverdrängers gegenüber (f) erweitert ist, wobei im Bereich des Verdränger-Oberteils die Wandung der Zuleitung einen Winkel ($\alpha$) im Bereich von 15 bis 30° zur Achse bildet und im Bereich des Verdränger-Unterteils der erweiterte Innendurchmesser der Zuleitung konstant ist.

3. Verteiler gemäß Anspruch 1 oder 2, dadurch gekennzeichnet, daß die Zone (c) der Ausgangsleitung zwischen den kreisförmigen Querschnitten (a) und (d) eine Zone mit ovalem Querschnitt aufweist.

4. Verteiler gemäß einem der Ansprüche 1 bis 3, dadurch gekennzeichnet, daß der Winkel am Fuß des Verdränger-Unterteils zum Ringspalt hin abgerundet ist.

5. Verteiler gemäß einem der Ansprüche 1 bis 4, dadurch gekennzeichnet, daß der Verteiler von mindestens einem Heizmantel umgeben ist und der Strömungsverdränger einen inneren Hohlraum enthält, wobei Heizmantel und Hohlraum an einen Wärmeträgerflüssigkeits-Kreislauf angeschlossen sind.

6. Verteiler gemäß einem der Ansprüche 1 bis 5, dadurch gekennzeichnet, daß die zentrale Zuleitung mit 3 bis 8 symmetrisch verteilten Ventilen radial verbunden ist.

7. Verteiler gemäß Anspruch 6, dadurch gekennzeichnet, daß eines der Ventile mit einer Ausschleuß-Vorrichtung und die übrigen Ventile mit je einer Verbraucher-Einheit verbunden sind.

8. Verteiler gemäß einem der Ansprüche 2 bis 7, dadurch gekennzeichnet, daß in etwa

$$g = 1{,}0 \cdot e$$

$$h = 1{,}15 \cdot f$$

$$k = 0{,}19 \cdot f$$

$$a = 0{,}6 \cdot b$$

$$d = 1{,}65 \cdot a$$

$$c = 1{,}33 \cdot a$$

und $\alpha = 25°$

## Claims

1. Distributor for viscous liquids consisting of a central pipe with the internal diameter (f) and at least two valves radially connected to the pipe, wherein each valve comprises a cylindrical housing with the internal diameter (b), a discharge opening discharging into a discharge pipe and a valve rod which can move in an axial direction inside the housing with a valve head which engages, in the closed position, in a valve seating with the diameter (e) in the wall of the pipe and whose foot does not obstruct the discharge opening in the open valve position, characterised in that

   - a flow displacer of length (h) with a cylindrical lower section of length (g) and a conical upper section facing the flow of liquid and forming an annular gap of width (k) in the region of the lower section of the displacer, is inserted centrally, wherein

      $$g = (1.0 \text{ to } 1.1) \cdot e$$

      $$h = (1.0 \text{ to } 1.3) \cdot f$$

      $$\text{and } k = (0.10 \text{ to } 0.25) \cdot f$$

   - and the discharge pipe directly connected to the discharge opening with the diameter (a) is widened to an internal diameter (d) over length (c), wherein

      $$a = (0.5 \text{ to } 0.7) \cdot b$$

      $$d = (1.4 \text{ to } 1.9) \cdot a$$

      $$\text{and } c = (0.8 \text{ to } 1.5) \cdot a.$$

2. Distributor in accordance with Claim 1, characterised in that the pipe is widened in the vicinity of the flow displacer, as compared with (f), wherein the wall of the pipe forms an angle ($\alpha$) in the range 15 to 30° to the axis in the vicinity of the upper section of the displacer and the widened internal diameter of the pipe is constant in the region of the lower section of the displacer.

3. Distributor in accordance with Claim 1 or 2, characterised in that zone (c) of the discharge pipe has a zone with an oval cross-section between the circular cross-sections (a) and (d).

4. Distributor in accordance with one of Claims 1 to 3, characterised in that the angle at the foot of the lower section of the displacer is chamfered down to the annular gap.

5. Distributor in accordance with one of Claims 1 to 4, characterised in that the distributor is surrounded by at least one heating jacket and the flow displacer contains an internal cavity, wherein the heating jacket and the cavity are connected to a heat transfer fluid circuit.

6. Distributor in accordance with one of Claims 1 to 5, characterised in that the central pipe is radially connected to 3 to 8 symmetrically distributed valves.

7. Distributor in accordance with Claim 6, characterised in that one of the valves is connected to a feed device and the other valves are each connected to one consumer unit.

8. Distributor in accordance with one of Claims 2 to 7, characterised in that, for instance,

   $$g = 1.0 \cdot e$$

   $$h = 1.15 \cdot f$$

   $$k = 0.19 \cdot f$$

   $$a = 0.6 \cdot b$$

   $$d = 1.65 \cdot a$$

   $$c = 1.33 \cdot a$$

   $$\text{and } \alpha = 25°$$

## Revendications

1. Distributeur pour liquides visqueux, constitué d'une conduite centrale d'arrivée du diamètre intérieur (f) et d'au moins deux soupapes radialement reliées avec la conduite d'arrivée, chaque soupape comportant un carter cylindrique de diamètre intérieur (b), une ouverture de décharge débouchant dans une conduite de décharge et une tige de soupape, mobile dans le carter selon la direction axiale, avec tête de soupape, qui, en position fermée de la soupape, vient se loger dans un siège de soupape, de diamètre (e), usiné dans la paroi de la conduite d'arrivée et dont, en position ouverte de la soupape, le pied libère juste l'ouverture de décharge, caractérisé par le fait

   - que dans la conduite d'arrivée, dans la zone des sièges de soupape, est inséré, de façon centrée, un accélérateur d'écoulement de la hauteur (h) présentant une partie inférieure cylindrique de la hauteur (g) et une partie supérieure de forme conique, orientée vers l'écoulement du liquide, avec formation d'une fente annulaire de la largeur (k) dans la zone de la partie inférieure de l'accélérateur, avec

$$g = (1,0 \text{ à } 1,1) \cdot e$$

$$h = (1,0 \text{ à } 1,3) \cdot f$$

$$\text{et } k = (0,10 \text{ à } 0,25) \cdot f$$

- et que la conduite de décharge, de diamètre (a) immédiatement au raccordement à l'ouverture de décharge, s'élargit sur une longueur (c) jusqu'au diamètre intérieur (d), avec

$$a = (0,5 \text{ à } 0,7) \cdot b$$

$$d = (1,4 \text{ à } 1,9) \cdot a$$

$$\text{et } c = (0,8 \text{ à } 1,5) \cdot a$$

2. Distributeur selon la revendication 1, caractérisé par le fait que, dans la zone de l'accélérateur d'écoulement, la conduite d'arrivée s'élargit par rapport à (f), étant précisé que, dans la zone de la partie supérieure de l'accélérateur, la paroi de la conduite d'arrivée fait avec l'axe un angle ($\alpha$) valant de 15 à 30° et que dans la zone de la partie inférieure de l'accélérateur, le diamètre intérieur, élargi, de la conduite d'arrivée est constant.

3. Distributeur selon la revendication 1 ou 2, caractérisé par le fait que la zone (c) de la conduite de décharge située entre les section circulaires (a) et (d) présente une zone de section ovale.

4. Distributeur selon l'une des revendications 1 à 3, caractérisé par le fait que l'angle en direction de la fente annulaire, au pied de la partie inférieure de l'accélérateur, est arrondi.

5. Distributeur selon l'une des revendications 1 à 4, caractérisé par le fait que le distributeur est enveloppé dans au moins une enveloppe chauffante et que l'accélérateur d'écoulement contient un espace creux intérieur, enveloppe chauffante et espace creux étant reliés à un circuit de liquide caloporteur.

6. Distributeur selon l'une des revendications 1 à 5, caractérisé par le fait que la conduite centrale d'arrivée est radialement reliée à 3 à 8 soupapes symétriquement réparties.

7. Distributeur selon la revendication 6, caractérisé par le fait que l'une des soupapes est reliée à un dispositif d'élimination et que les autres soupapes le sont chacune à un organe utilisateur.

8. Distributeur selon l'une des revendications 2 à 7, caractérisé par le fait que l'on a à peu près

$$g = 1,0 \cdot e$$

$$h = 1,15 \cdot f$$

$$k = 0,19 \cdot f$$

$$a = 0,6 \cdot b$$

$$d = 1,65 \cdot a$$

$$c = 1,33 \cdot a$$

$$\text{et } \alpha = 25°$$

Fig. 1

Fig. 2

Fig. 3

Fig. 4

Scnitt A – A

Fig. 5a

Fig. 5b

„Ansicht F"

## Fig. 6